# EUROPÄISCHE PATENTANMELDUNG

(11) **EP 3 754 911 A1**
(43) Veröffentlichungstag der Anmeldung: **23.12.2020**
(21) Anmeldenummer: 20180776.5
(22) Anmeldetag: 18.06.2020
(51) Int. Cl.: H04L 12/58

(54) **VERFAHREN ZUR KOMMUNIKATION MITTELS MESSENGER-NACHRICHTEN UND SYSTEM ZUR DURCHFÜHRUNG DES VERFAHRENS**

(30) Priorität: 19.06.2019 DE 102019116705
(71) Anmelder: Adviqo GmbH, 10589 Berlin (DE)
(72) Erfinder: Kohl, Ulrich Walter, 13465 Berlin (DE)
(74) Vertreter: Michalski Hüttermann & Partner Patentanwälte mbB

(57) **Zusammenfassung**

Die Erfindung betrifft ein Verfahren zur Kommunikation mittels Messenger-Nachrichten zwischen zumindest einem Sender (4) und zumindest einem Empfänger (5, 6) über zumindest einen Messenger-Dienst (11, 12, 13, 15), wobei der Messenger-Dienst (11, 12, 13, 15) kommunikationstechnisch mit einer Integrationsplattform (1) verbunden ist oder wird und eine Nachricht vom Sender (4) mittels des Messenger-Dienstes (11, 12, 13) unter Verwendung einer senderspezifischen Sender-Messenger-Identität und einer empfängerspezifischen Sender-Messenger-Identität an die Integrationsplattform (19 übermittelt wird, in der Integrationsplattform (1) der senderspezifischen Sender-Messenger-Identität und der empfängerspezifischen Sender-Messenger-Identität jeweils eine hinterlegte senderspezifische bzw. empfängerspezifische Plattform-Identität zugeordnet werden, eine der empfängerspezifischen Plattform-Identität zugehörige empfängerspezifische Empfänger-Identität ermittelt wird und die Nachricht von der Integrationsplattform an die empfängerspezifischen Empfänger-Identität geleitet wird. Die Erfindung betrifft außerdem ein System zur Durchführung des erfindungsgemäßen Verfahrens.

## Beschreibung

Die vorliegende Erfindung betrifft ein Verfahren zur Kommunikation mittels Messenger-Nachrichten zwischen zumindest einem Sender und zumindest einem Empfänger über zumindest einen Messenger-Dienst, bei welchem Verfahren eine Möglichkeit für ein Gateway zwischen verschiedenen Messenger-Diensten zur Verfügung gestellt wird. Darüber hinaus betrifft die vorliegende Erfindung ein System zur Durchführung des erfindungsgemäßen Verfahrens.

Messenger-Dienste erfreuen sich steigender Beliebtheit. Sie dienen bisher vorwiegend der P2P-Kommunikation (Peer-to-Peer- Kommunikation) zwischen Privatpersonen bzw. der Kommunikation zwischen Personen und unbekannten Ansprechpartnern in Firmen. Bei einer P2P-Kommunikation wird der Messenger symmetrisch zwischen einem Kommunikations-Initiator oder -Sender und einem Kommunikations-Empfänger genutzt. Beide nutzen die gleiche Nutzeroberfläche bzw. mobile App. In der Regel kennen sich beide Kommunikationsparteien persönlich oder verfügen zumindest über ihre jeweiligen Kontaktdaten. Oftmals muss der Kontakt des Gegenübers in der Kontakt-Datenbank des Endgeräts eingetragen, d.h. vor dem Kommunikationsvorgang auch schon bekannt sein.

Im geschäftlichen Einsatz sind auch Firmen, meist der Kundendienst, über Messenger für ihre Kunden erreichbar. Unter einem einzigen Messenger-Kontakt sind dann mehrere Agenten erreichbar, die Kundenanfragen beantworten. Dem Kunden ist diesem Fall die genaue Person, mit der er kommuniziert, egal. Bei mehreren Dialogen kann es sein, dass die Person wechselt, mit der ein Kunde kommuniziert, obwohl immer derselbe Kommunikationspartner adressiert wird.

Im Vergleich mit Telefondiensten über Telefonnetze oder Telefonanlagen, die auf eine wesentlich längere Entwicklungshistorie zurückblicken, sind messenger-basierte Dienste noch sehr einfach strukturiert. Die Messenger-Welt ist zusätzlich stark fragmentiert. Telefonanbieter arbeiten in der Regel nach einem einheitlichen Kommunikationsstandard. Ihre Telefondienste und -netze sind daher kompatibel und zum Beispiel im Fall von Festnetz/ISDN, Mobilnetzen und Voice-Over-IP miteinander verbunden. Auf diese Weise können Anrufer aus einem Netz eines Anbieters A Teilnehmer in einem Netz eines Anbieters B anrufen. Im Gegensatz dazu funktionieren Messenger-Dienste nur innerhalb eines proprietären Anbietersystems, insofern existieren mehrere gleichartige Systeme parallel zueinander und besitzen keine gegenseitige Konnektivität.

Das Telefonnetz erlaubt einen Einsatz und Betrieb von Callcentern, also die Möglichkeit, eine Mehrzahl an Agenten unter einer einzigen Rufnummer (der des Callcenters) zu erreichen. Messenger-Dienste hingegen bieten im Verlauf ihrer historischen Entwicklung nur eine 1: 1-Kommunikation. Erst in letzter Zeit wurden Möglichkeiten entwickelt (z.B. über die Whatsapp Business API 2018), externe Backend-Systeme anzuschließen, die von mehreren Agenten bedient werden.

Beim Telefon gibt es sogenannte Premium-Rate-Dienste (PRS - Premium Rate Services) mit sogenannten PRS-Telefonnummern, mittels denen es möglich ist, bestimmte Dienste zu monetarisieren, zum Beispiel über Verträge mit Telefondienstleistern eine Bezahlung der Angerufenen vorzunehmen. Die Bezahlung wird über die Telefonrechnung des Anrufers eingetrieben. Es ist hingegen bislang nicht bekannt, eine Kommunikation über Messenger-Systeme zu monetarisieren.

Im Rahmen derartiger PRS-Dienste können die PRS-Telefonnummern als Alias für die realen geographischen Telefonnummern der Angerufenen dienen, während die realen Telefonnummern der konkreten Anschlussinhaber dem Anrufer unbekannt bleiben. ACD- und IVR-Systeme werden zur Bedienung der anrufenden Kunden, zur Unterstützung der Angerufenen und zum intelligenten Routing der Calls eingesetzt. Natürliche sowie juristische Personen können rollenabhängig mehrere Telefonnummern besitzen, unter denen sie erreichbar sind. Messenger sind hingegen bislang an eine Online-Identität gebunden, die in der Regel auch an eine einzige (meist mobile) Telefonnummer gebunden ist.

Da Telefondienste mittels Sprachkommunikation in Echtzeit und synchron ablaufen, Messenger-Dienste hingegen nur asynchrone und zeitversetzte Text-, Sprach- und Bildkommunikation umfassen, können aus dem technischen Gebiet der Telefonie bekannte Verfahren für Mehrwertdienste nicht einfach für Messenger-Dienste übernommen werden, um ein ähnliches Dienstspektrum zu schaffen.

Es ist Aufgabe der vorliegenden Erfindung, ein Verfahren und ein System zur Verfügung zu stellen, mit dem eine messengerbasierte und messengerübergreifende Kommunikation ggf. unter Erbringung von Mehrwertdiensten wie Premium-Rate-Diensten möglich ist.

Diese Aufgabe wird erfindungsgemäß durch ein Verfahren und durch ein System mit den Merkmalen gemäß den jeweiligen unabhängigen Ansprüchen gelöst. Vorteilhafte Weiterbildungen der vorliegenden Erfindung sind Gegenstand der abhängigen Ansprüche.

Die Erfindung stellt demnach ein Verfahren zur Kommunikation mittels Messenger-Nachrichten zwischen zumindest einem Sender und zumindest einem Empfänger über zumindest einen Messenger-Dienst bereit. Der Messenger-Dienst ist oder wird kommunikationstechnisch mit einer Integrationsplattform verbunden. Eine Nachricht vom Sender wird mittels des Messenger-Dienstes unter Verwendung einer senderspezifischen Sender-Messenger-Identität und einer empfängerspezifischen Sender-Messenger-Identität an die Integrationsplattform übermittelt. In der Integrationsplattform werden der senderspezifischen Sender-Messenger-Identität und der empfängerspezifischen Sender-Messenger-Identität jeweils eine hinterlegte senderspezifische bzw. empfängerspezifische Plattform-Identität zugeordnet. Es wird eine der empfängerspezifischen Plattform-Identität zugehörige empfängerspezifische Empfänger-Identität ermittelt und die Nachricht wird von der Integrationsplattform an die empfängerspezifische Empfänger-Identität geleitet.

Im Rahmen der vorliegenden Beschreibung der Erfindung sind die Begriffe "Sender" und "Empfänger" als am erfindungsgemäßen Verfahren Beteiligte zu verstehen. Der Sender ist im Rahmen von Anspruch der Kommunikationsinitiator. Die diesen Beteiligten zugeordneten Rollen als Sender und Empfänger können im Laufe des Verfahrens wechseln, zum Beispiel ist ein Beteiligter bei in einer ersten Richtung ablaufenden Kommunikation der Sender und der andere Beteiligte dabei der Empfänger, während bei in umgekehrter Richtung ablaufenden Kommunikation diese Rollen getauscht werden und der erste Beteiligte der Empfänger und der zweite Beteiligte der Sender ist. Im Falle von Gruppenkommunikation erreicht ein Sender eine Menge von Empfängern in der Regel praktisch gleichzeitig, jedes Gruppenmitglied kann Nachrichten in die Gruppe senden, die alle anderen empfangen. Bei dem Sender kann es sich insbesondere um eine natürliche Person wie einen Kunden, einen Dienstleistungsempfänger, einen Ratsuchenden oder einen Mehrwertdienstleistungsempfänger handeln, die eine erste Anfrage oder Nachricht an den Empfänger sendet. Bei dem Empfänger kann es sich insbesondere um verschiedene Individualkontakte zum Beispiel in Form von natürlichen Personen, wie Berater oder Mitarbeiter eines Dienstleistungserbringers, oder um automatische oder automatisierte Systeme des Dienstleistungserbringers zur Bearbeitung einer senderseitigen Anfrage oder um eine Marke oder einen Service des Dienstleitungserbringers handeln. Der Empfänger kann insbesondere mittels verschiedenen Messengern oder mittels einer Web-Plattform erreichbar. Der Sender/Dienstleistungsempfänger kann über seinen eigenen Messenger-Dienst zu allen Empfängern, insbesondere zu allen Individualkontakten/Beratern des Dienstleistungserbringers, unabhängig von deren jeweils genutztem Messenger-Dienst eine Kommunikationsbeziehung eingehen. Dabei können zusätzlich Dienste erfragt und erbracht werden, was bisher nur im technischen Gebiet der Mehrwerttelefonie bekannt war.

Die vorliegende Erfindung kann sich insbesondere darauf beziehen, eine Kommunikation über einen Messenger-Dienst mit Mehrwertdiensten, wie sie insbesondere im Rahmen von Telefonmehrwertdiensten aus Telefonnetzen bekannt sind, zu ermöglichen. Dabei werden verschiedene Messenger-Dienste oder Messenger-Systeme mittels der Integrations-Plattform, die je nach Ausführungsform der Erfindung eine Integrations- und Transaktionsplattform (ITP) ausbilden kann, ergänzt und verbunden. Im Folgenden bezieht sich der Begriff ITP sowohl auf eine Integrations-Plattform als auch auf eine Integrationsund Transaktionsplattform.

Der Sender/Dienstleistungsempfänger nutzt einen Messenger-Dienst seiner Wahl, wobei allerdings irrelevant ist, ob der Empfänger/Dienstleistungserbringer denselben oder einen anderen Messenger-Dienst oder eine Schnittstelle, auch als Administrator-Schnittstelle bezeichnet, direkt auf der ITP nutzt, die ihm z.B. erlaubt, eine Übersicht über viele parallele Kommunikationsvorgänge zu bewahren, ohne selbst eine Messenger-App nutzen zu müssen.

Ein besonderer Vorteil einer Ausführungsform der Erfindung besteht darin, dass in der Messenger-Anwendung des Senders/Dienstleistungsempfängers der mit diesem kommunizierende Individualkontakt des Empfängers/Dienstleistungserbringers wie ein direkter Messengerkontakt zu sein scheint, und die Kommunikation zu diesem wie eine normale Messengerkonversation erscheint. Real endet der Kommunikationskanal des senderseitigen Messengers allerdings auf der Integrationsplattform (ITP).

Die Integrationsplattform (ITP) bewirkt ihrerseits die weitere Kommunikation mit dem Individualkontakt des Empfängers/Dienstleistungserbringers, insbesondere über einen anderen Kanal, z.B. einen anderen Messenger-Dienst. Die ITP leitet insbesondere eine Anfrage des Sendes/Dienstleistungsempfängers an den Individualkontakt des Empfängers/Dienstleistungserbringers weiter und routet dessen Antworten wieder zum Sender/Dienstleistungsempfänger.

Außerdem kann die ITP die Kommunikation steuern und mit zusätzlichen Dienstleistungen wie z.B. Payment anreichern. Dazu sind zusätzliche Verfahren und Daten notwendig, die in der ITP erbracht bzw. gespeichert werden. Dazu nutzt die ITP eine Datenbank, die vorzugsweise alle Identitäten aller Beteiligten sowie deren Eigenschaften enthält, und bildet die Identitäten und tatsächlich genutzten Messenger-Systeme aufeinander ab. Die ITP implementiert zudem die Verfahren zum Verbinden der Teilnehmer miteinander. In der Datenbank können dann teilnehmerspezifisch weitere Daten abspeichert werden, die für zusätzliche Funktionen der Plattform benötigt werden.

Es ist von Vorteil, wenn für beide Kommunikationsteilnehmer, den Sender/Dienstleistungsempfänger und den Empfänger/Individualkontakt des Dienstleistungserbringers, Identitäten (d.h. jeweils mindestens eine Identität) bei den jeweils genutzten Messenger-Diensten registriert sind. Derartige Identitäten werden im Rahmen der Erfindung als Messenger-Identitäten oder Individualidentitäten bezeichnet. Die ITP kann diese Messenger-Identitäten jeweils durch eine eigene Systemidentität, die im Rahmen der Erfindung als Plattform-Identität bezeichnet wird, ergänzen. Die Messenger-Identitäten und die Plattform-Identitäten können, aber müssen nicht unbedingt dieselben sein, es kann im Rahmen der Erfindung in wünschenswerter Weise ermöglicht werden, mit Pseudonymen zu agieren. Relevant sind die Eindeutigkeit und die eineindeutige Abbildbarkeit der Identitäten in den Systemen.

Nach einer Ausführungsform der Erfindung werden bei der Umsetzung der Messenger-Integration Gruppen verwendet. In diesem Fall reicht es aus, wenn für einen Dienstleistungserbringer, dessen Service, Unternehmen oder Marke eine empfängerspezifische Plattformidentität, also ein Dienstleiter-Profil, eingerichtet ist oder wird, während auf ein Vorsehen von empfängerspezifischen Empfänger-Messenger-Identitäten verzichtet werden kann. Auf diese Weise ist es nicht erforderlich, für jeden Individualkontakt/Empfänger ein echtes oder virtuelles Konto/Profil mit einer Empfänger-Messenger-Identität einzurichten, so dass nicht unerhebliche Kosten eingespart werden können. Für jede Zweierbeziehung von Sender/Kunde zu Empfänger/Individualkontakt/Berater wird bei dieser Ausführungsform eine Zweier-Gruppe eingerichtet. Damit ist immer klar, welcher konkrete Ansprechpartner in einer Nachricht adressiert ist.

Nach der Erfindung können die Identitäten, insbesondere die Messenger-Identitäten, der Individualkontakte des Dienstleistungserbringers virtuell sein. Falls der auf der Seite des Empfängers/Dienstleistungserbringers genutzte Messenger-Dienst Teilnehmeridentitäten normalerweise an physikalische, reale Gegenstände oder reale Eigenschaften, wie zum Beispiel Handynummern oder IMEIs, bindet, können sie nach einer Ausführungsform der Erfindung an physikalische Gegenstände/Eigenschaften des ITP-Betreibers (z.B. Handynummern unter dessen Kontrolle) gebunden sein. Die Verknüpfung der jeweiligen Identitäten kann entweder bei der Registrierung der Nutzer, der Pflege der Profildaten und/oder durch Senden von Nachrichten an die Plattform erfolgen. Nach einer Ausführungsform der Erfindung wird als empfängerspezifische Empfänger-Identität eine empfängerspezifische Empfänger-Messenger-Identität des Messenger-Dienstes oder eines weiteren Messenger-Dienstes ermittelt und die Nachricht von der Integrationsplattform an die empfängerspezifischen Empfänger-Messenger-Identität geleitet. Nach einer weiteren Ausführungsform kann die Nachricht zur Durchführung einer In-Band-Steuerung ausgebildet sein und zumindest ein Keyword zur Identifizierung des Empfängers enthalten, das in der Integrationsplattform der empfängerspezifischen Plattform-Identität zugeordnet wird.

Eine für geschäftliche Einsätze besonders vorteilhafte Ausführungsform sieht vor, dass auf der Integrationsplattform für den Empfänger eine (einzige) empfängerspezifische Plattform-Identität hinterlegt ist oder wird, die mit mehreren empfängerspezifischen Messenger-Identitäten für den Empfänger gekoppelt ist. Auf diese Weise können mehrere Individualkontakte eines Dienstleistungserbringers besonders einfach in das erfindungsgemäße Verfahren implementiert werden und sind über eine einzige ID erreichbar. In entsprechender Weise kann nach einer weiteren Ausführungsform auf der Integrationsplattform für den Sender eine (einzige) senderspezifische Plattform-Identität hinterlegt sein oder werden, die mit mehreren senderspezifischen Messenger-Identitäten für den Sender gekoppelt ist.

Zur Realisierung einer Gateway-Funktion, also einer Vermittlung zwischen verschiedenen Messenger-Diensten oder einem Messenger-Dienst und direkten Nutzern der ITP, ist nach einer Ausführungsform der Erfindung ein Dienstleistungserbringer auf der ITP oder einem weiteren in die ITP integrierten System registriert, zum Beispiel mit einem Dienstleisterprofil oder Konto. Außerdem muss er mit seinem Konto oder seinem Profil verknüpfte virtuelle Identitäten im genutzten Messenger-Dienst besitzen, insbesondere virtuelle Identitäten für jeden Individualkontakt. Bei einem Dienstleistungsempfänger wird hingegen vorausgesetzt, dass dieser in der Regel ein bestehendes Nutzerkonto bei seinem Messenger-Dienst besitzt, andernfalls ist eines zu erstellen.

Bei der ITP über den Messenger-Dienst des Dienstleistungsempfängers eingehende Nachrichten werden in der ITP dem virtuellen Konto des Dienstleistungserbringers zugeordnet und übertragen. Eine Kommunikation in entgegengesetzte Richtung, also Antworten des Dienstleistungserbringers an den Dienstleistungsempfänger, werden in entsprechender Weise umgekehrt zurück an den Messenger-Dienst des Dienstleistungsempfängers übertragen.

Nach einer Ausführungsform der Erfindung ist eine Abwicklung eines Transaktionsdienstes möglich. Dazu besitzt auch der Dienstleistungsempfänger ein Nutzerkonto mit gewissen transaktionsspezifischen Daten, zum Beispiel Adressdaten, Kontodaten, Zahlungsinformationen etc. Vorzugsweise besteht ein entsprechender Dienstleistungsvertrag zwischen den Dienstleistungsempfänger und dem Dienstleistungserbringer.

Alternativ kann zwischen dem Betreiber der ITP und dem Dienstleistungsempfänger ein Dienstleistungsvertrag bestehen und der Betreiber die Abrechnung der erbrachten Mehrwertdienstleistungen durchführen. Dem Dienstleistungserbringer kann dann vom Betreiber der ITP ein entsprechender Anteil vergütet werden. Insgesamt können durch die Erfindung Kosten wesentlich flexibler gestaltet werden als aus dem Gebiet von Telefonoder SMS-Mehrwertleistungen bekannt. Durch eine Trennung von Mediennutzung und Abrechnung können üblichen Abrechnungsmodelle wie zum Beispiel "Kosten pro Zeiteinheit" oder "Kosten pro Nachricht" genutzt werden. Im letzteren Fall kann insbesondere nach gesendeten oder empfangenen Nachrichten differenziert werden, auch beliebig aggregier- und kombinierbar. Eine automatische oder automatisierte guthabenbasierte Abrechnung (Prepayment) liegt außerdem im Bereich der Erfindung. Als weitere Neuerung können Kosten für erbrachte oder zu erbringende Mehrwertdienste zwischen den Parteien über den Messengerkanal (in band) verhandelt und individuell in Rechnung gestellt werden. Dies kann insbesondere über einen Austausch von Nachrichten mit Schlüsselworten erfolgen, die von der ITP-Plattform interpretiert werden.

Die Erfindung umfasst außerdem ein System zur Kommunikation mittels Messenger-Nachrichten zwischen zumindest einem Sender und zumindest einem Empfänger über zumindest einen Messenger-Dienst, welches System zum Durchführen eines Verfahrens nach der Erfindung, insbesondere eines Verfahrens nach einem der angehängten Ansprüche ausgelegt ist. Das System kann insbesondere eine Integrationsplattform mit einer Kontrolllogik (insbesondere umfassend eine Software oder gebildet durch eine Software) und eine Datenbank mit Zuordnungen senderspezifischer und empfängerspezifischer Messenger-Identitäten und Plattform-Identitäten umfassen. Die Integrationsplattform kann außerdem zur Kommunikation mit der Datenbank ausgebildet sein und zumindest eine Messengerschnittstelle (API) zur Kommunikation mit einem Messenger-Dienst aufweisen.

Die Schnittstellen zu den angeschlossenen Messenger-Diensten sind insbesondere dazu eingerichtet und ausgebildet, Nachrichten zu senden und/oder zu empfangen. Außerdem können die Schnittstellen zum Durchführen von Verfahren zur Abbildung der Identitäten aus den angeschlossenen Systemen eingerichtet und ausgebildet sein. Nach einer Ausführungsform kann eine Schnittstelle nativ in der Lage sein, Nachrichten für verschiedene Dienstleistungserbringer entgegenzunehmen. Alternativ ist für jeden potenziellen Dienstleistungserbringer eine eigene Schnittstelle instanziiert. Entsprechendes gilt analog beim Senden: Eine Schnittstelle kann in der Lage sein, verschiedene Messenger-Identitäten verschiedener Dienstleistungserbringer entgegenzunehmen, oder es wird für jeden Dienstleistungserbringer eine eigene Schnittstelle instanziiert. Eine Schnittstelle kann programmatisch ausgebildet sein oder physikalische Geräte wie z.B. Smartphones umfassen. Die Schnittstellen können sich außerdem auf normale Nutzer-Schnittstellen setzen.

Die ITP besitzt nach einer weiteren Ausführungsform der Erfindung eine eigene Operator-Schnittstelle. Nach einer Ausführungsform der Erfindung ist die empfängerspezifische Empfänger-Identität mit einer Administrator-Schnittstelle verknüpft. Außerdem wird die Nachricht an die Administrator-Schnittstelle geleitet. Diese Ausführungsform der Erfindung kann es dem Empfänger/Dienstleistungserbringer insbesondere erlauben, direkt auf der ITP und nicht unter Verwendung von Messenger-Diensten zu kommunizieren, insbesondere Nachrichten zu senden und zu empfangen. Die Operator-Schnittstelle kann insbesondere dazu dienen, eine Administration des Empfängers/Dienstleistungserbringers und Funktionen zu ermöglichen und insbesondere Daten und Beziehungen einzugeben.

Nach einer Ausführungsform umfasst die ITP eine Datenbank, die vorzugsweise alle für den Betrieb notwendigen Daten über die angeschlossenen Systeme, die Identitäten und ihre Beziehungen sowie Informationen über sie wie z.B. die Erreichbarkeiten enthält. Die Datenbank ist vorzugsweise eine relationale Datenbank, eine dokumentorientierte Datenbank oder eine NoSQL-Datenbank.

Man kann auch sagen, dass nach der Erfindung eine Plattform zur Verfügung gestellt wird, die ein Gateway zwischen mehreren separaten Messenger-Systemen oder Messenger-Diensten darstellt. Die Erfindung erlaubt eine messengeranbieterübergreifende Kommunikation in einer transparenten Weise, ohne dass die Kommunikationsparteien, also Dienstleistungsempfänger und Dienstleistungserbringer, dies bemerken. Die zwei kommunizierenden Parteien, insbesondere Personen, müssen sich und/oder ihre wirklichen Identitäten bzw. persönlichen Telefonnummern gegenseitig nicht kennen, sondern können im Rahmen der Erfindung nur die jeweiligen Pseudonyme erkennen. Die reine Kommunikationsfunktion kann durch Möglichkeiten der Steuerung und Abrechnung erweitert sein oder werden. Durch In-Band-Austausch von Steuerungsanweisungen, insbesondere von Steuerungsworten, und/oder Steuerungsnachrichten kann einerseits ein Multiplexing eines Messenger-Profils auf mehrere darüber erreichbare Kontakte, insbesondere Personen, erreicht werden, andererseits eine Aushandlung von Preisen ermöglicht werden. Insgesamt können durch die Erfindung im technischen Gebiet von Messenger-Diensten ähnliche Funktionalitäten und insbesondere Mehrwertdienste geschaffen werden, wie sie im Gebiet der Telefonie bereits bekannt sind. Damit stellt die Erfindung eine Grundlage für einen Einsatz von Messenger-Kommunikation in einem professionellen und/oder kommerziellen Umfeld dar.

Das Verfahren und das System nach der Erfindung ermöglichen insbesondere ein Gateway zwischen unterschiedlichen Messengern sowie eine transparente, Messenger-übergreifende Kommunikation. Eine Pseudonymisierung ist neben einer eindeutigen Erreichbarkeit einer Person ohne Preisgabe der wahren Identität möglich. Außerdem bietet die Erfindung neben der Möglichkeit einer Entkopplung von Telefonnummern und Identitäten eine Möglichkeit eines Multiplexing von Identitäten, so dass sich hinter einem Messenger-Konto eine Gruppe von Personen verbergen und dennoch individuell ansprechbar sein kann. Ein wesentlicher Vorteil ist die zentrale Kontrolle des Kommunikationsstroms sowie die Abwicklung von Mehrwertdiensten mittels der Erfindung.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung eines System nach der vorliegenden Erfindung;
- Fig. 2: in einer tabellarischen Darstellung einen beispielhaften Aufbau eines Teils einer Datenbank zur Verwendung in dem System und dem Verfahren nach der Erfindung; und
- Fig. 3: in einer tabellarischen Darstellung einen beispielhaften Aufbau eines weiteren Teils einer Datenbank zur Verwendung in dem System und dem Verfahren nach der Erfindung.

In den Figuren werden gleiche und funktionsgleiche Elemente mit den gleichen Bezugszeichen versehen.

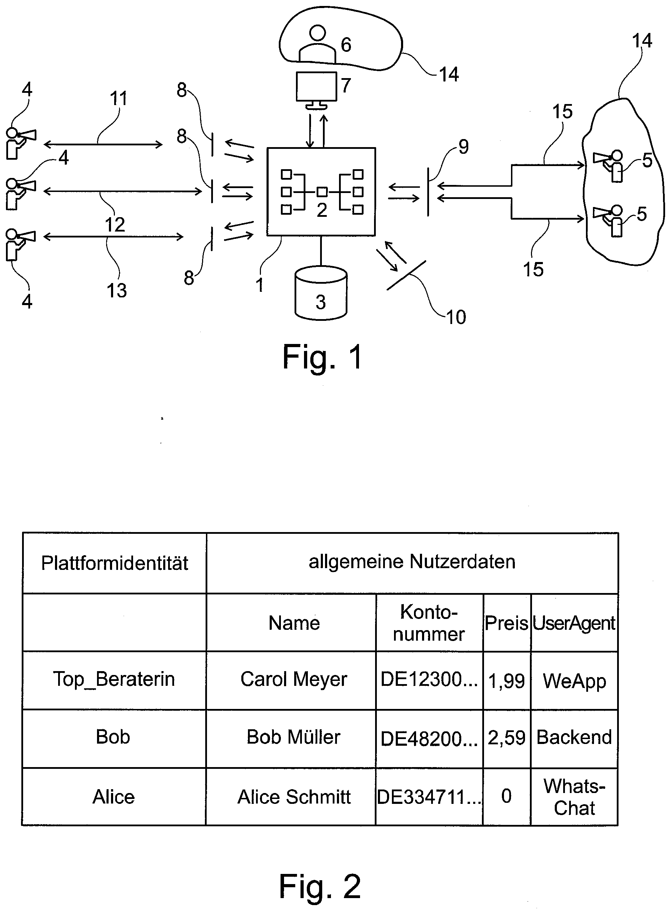

Fig. 1 zeigt in einer schematischen Darstellung ein System nach der Erfindung. Dieses umfasst als zentralen Bestandteil eine Integrations-Plattform 1, die als Integrations- und Transaktionsplattform 1 (ITP) ausgebildet ist und eine Kontrolllogik 2 beinhaltet. Die Integrations- und Transaktionsplattform 1 ist kommunikationstechnisch mit einer Datenbank 3 gekoppelt oder besitzt eine solche Datenbank 3, die im gezeigten Ausführungsbeispiel ebenfalls Bestandteil des Systems ist.

Die Integrations- und Transaktionsplattform 1 ist zum Beispiel in eine Rechnereinheit integriert oder durch eine solche gebildet. Zum Bewirken eines Kommunikationsdatenflusses mit Sendern 4, die hier Dienstleistungsempfänger 4 darstellen, umfasst sie erste Schnittstellen 8 (API), die einen Datenaustausch mit verschiedenen Messenger-Diensten 11, 12, 13 ermöglichen. Zum Bewirken eines Kommunikationsdatenflusses mit einem Empfänger 5, hier Individualkontakte 5 in Form von Beratern 5 eines Dienstleistungserbringers 14 umfasst die Integrations- und Transaktionsplattform 1 zumindest eine zweite Schnittstelle 9 (API), die einen Datenaustausch mit zumindest einem Messenger-Dienst 15 ermöglicht. Der Messenger-Dienst 15 kann mit einem der Messenger-Dienste 11, 12, 13 identisch oder zu diesen unterschiedlich sein. Alternativ oder zusätzlich zu der zumindest einen zweiten Schnittstelle 9 umfasst die Integrations- und Transaktionsplattform 1 eine Web-Nutzerschnittstelle 7, auch als Administrator-Schnittstelle 7 bezeichnet, über die ein Datenaustausch mit einem weiteren Individualkontakt 6 beispielsweise in Form eines Beraters 6 des Dienstleistungserbringers 14 erfolgen kann. Schließlich umfasst die Integrations- und Transaktionsplattform 1 eine weitere Schnittstelle 10 zum Bewirken von Zusatzfunktionen.

Bei den Dienstleistungsempfängern 4 kann es sich insbesondere um Kunden 4 oder Nutzer handeln. Diese kommunizieren als Kommunikationsinitiator über ihren Messenger (11, 12, 13), der zum Beispiel auf einem Mobilfunkendgerät des Kunden 4 installiert ist, über eine der ersten Schnittstellen 8, die als individuelle Messenger-API 8 bezeichnet werden kann, mit der ITP 1. Diese nutzt in der Datenbank 3 enthaltene Daten zur Steuerung der Kontrolllogik 2. Die Berater 5, 6 arbeiten entweder an der Web-Nutzerschnittstelle 7 oder über die im Beispiel integrierte API 9 des weiteren Messengers 15. Bei der nachfolgenden Beschreibung werden der Einfachheit halber der Dienstleistungsempfänger 4 als Sender 4 (da dieser die erste Nachricht sendet) und der Individualkontakt 5,6 des Dienstleistungserbringers 14 als Empfänger 5,6 bezeichnet (da dieser die erste Nachricht empfängt).

Die ITP 1 ist über ihre Schnittstellen 8, 9 an alle in das Verfahren integrierten Messenger-Dienste 11, 12, 13, 15 angeschlossen. Die ITP 1 führt auf der Grundlage der Daten aus der Datenbank 3 eine Weiterleitung von Nachrichten der Sender 4 (Kundennachrichten) zu den Empfängern 5, 6 der Dienstleistungserbringer 14 und umgekehrt durch und kann falls erwünscht in der Kontrolllogik 2 Mehrwertdienstfunktionen wie eine Zeitsteuerung oder eine Bezahlfunktion über die Schnittstelle 10 in die Weiterleitungsfunktion integrieren oder mit dieser verknüpfen.

Die Aufrufe an die Messenger-Dienste 11, 12, 13 bzw. 15 sehen schematisch wie folgt aus:
Schnittstelle 8, Identifikation des Senders 4 (Dienstleistungsempfänger/Nutzer 4) über die API-Instanz:
- weApp7_API_Bob_Receive (Sender, Message)
   # liefert an Bob eine Nachricht "Message" von "Sender" über WeApp aus
- weApp7_API_Bob_Send (Empfänger, Message)
   # schickt über WeApp die Nachricht "Message" von Bob an "Empfänger"

Schnittstelle 9, Identifikation des Empfängers 5, 6 (Individualkontakte 5, 6 des Dienstleistungserbringers 14) über einen API-Parameter:
- WhatsChat8_API_Receive (Sender, Empfänger, Message)
   # liefert an "Empfänger" eine Nachricht "Message" von "Sender" über WhatsChat aus
- WhatsChat8_API_Send (Sender, Empfänger, Message)
   # schickt über WhatsChat die Nachricht "Message" von "Sender" an "Empfänger"

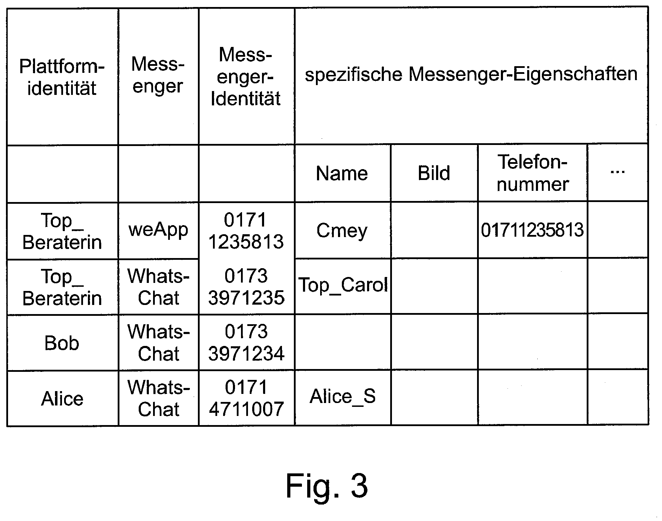

Der beispielhafte Aufbau und die Struktur der Datenbank 3 sind anhand der in den Figuren 2 und 3 gezeigten Tabellen ersichtlich. Die Datenbank 3 umfasst demnach eine Primärtabelle 16 und eine Sekundärtabelle 17. Die Primärtabelle 16 enthält zentrale, messengerübergreifende Information über die Teilnehmer, hier in Form der Dienstleistungsempfänger 4 als Sender 4 und der Individualkontakte 5, 6 des Dienstleistungserbringers 14 als Empfänger 5, 6, insbesondere deren Plattformidentität, die auch als führende Identität oder systemweite Identität bezeichnet werden kann. Außerdem können in der Primärtabelle 16 weitere Informationen wie Adressen, Preise, ein Zeitplan und/oder Zahlungsinformation enthalten sein.

In der Sekundärtabelle 17 werden pro Messenger alle messenger-spezifischen Daten, insbesondere die dortige Messenger-Identität (identifizierende Daten) und zugehörige Profildaten, gespeichert. In der Primärtabelle 16 sind bzw. werden alle messenger-spezifischen Daten aller Messenger-Identitäten eines Teilnehmers/einer Person verknüpft und mit der Plattform-Identität ergänzt. Über diese Plattform-Identität kann jeder Teilnehmer/jede Person gefunden und konkret adressiert werden. Es ist von besonderem Vorteil, dass sich mit dieser Datenbankstruktur alle Kommunikationsanfragen aufeinander abbilden lassen.

Ein Sender 4 (Dienstleistungsempfänger/Kunde 4), der einen Empfänger 5, 6 (Individualkontakt/Berater 5, 6) des Dienstleistungserbringers 14 per Messenger erreichen will, adressiert dessen (virtuelles) Profil, das heißt dessen empfängerspezifische Sender-Messenger-Identität, auf dem von ihm selbst genutzten Messenger 11, 12, 13 und schickt die Nachricht ab. Diese wird dann über die messengerspezifische API 8 an die ITP 1 geliefert. Die ITP 1 ermittelt anhand der empfängerspezifischen Sender-Messenger-Identität die empfängerspezifische Plattform-Identität sowie den Kanal und ggf. die empfängerspezifische Empfänger-Messenger-Identität, über die der adressierte Individualkontakt/Berater 5, 6 tatsächlich erreichbar ist, und leitet die Nachricht dorthin weiter. Der Individualkontakt/Berater 5, 6 empfängt die Nachricht über seinen verwendeten Messenger-Dienst 15 das oder Backend-System 7 und kann sie beantworten.

Für die Rückübertragung der Antwort des Individualkontakts/Beraters 5, 6 an den Dienstleistungsempfänger/Kunde 4 muss dieser, also der ursprüngliche Sender 4, identifiziert werden. Dafür gibt es nach der Erfindung mehrere Varianten:
1. Der Sender 4 hat eine eigene virtuelle ITP-Identität auf dem Berater-Messenger 15, dann funktioniert die Rück-Übertragung wie die Hin-Übertragung in umgekehrter Richtung.
2. Der Individualkontakt/Berater 5, 6 arbeitet mit dem Backend 7 (und ohne Messenger), dann ist die Adressierungslogik im Backend 7 enthalten, das den Dienstleistungsempfänger/Nutzer 4 als ursprünglichen Sender 4 der Nachricht abgespeichert hat.
3. Die Nachrichten zwischen ITP 1 und dem Individualkontakt/Berater 5, 6 sind durch eine In-Band-Steuerungslogik ergänzt (vergleichbar mit Keywords von Shortcode-SMS), bei denen das erste Wort der Nachricht den eigentlichen Kommunikationspartner identifiziert.

Hier würde die Nachricht an den Individualkontakt/Berater 5, 6 als Empfänger z.B. als erstes Wort einen Codenamen oder Codezahl für den Dienstleistungsempfänger/Nutzer 4 als ursprünglichen Sender enthalten, das in der Antwort auch wieder an erster Stelle steht.

Hervorzuheben ist, dass die jeweiligen Empfänger/Berater 5, 6 nur maximal ein persönliches Messenger-Konto bzw. gar keines, wenn sie direkt auf dem Backend 7 der ITP 1 arbeiten, benötigen und dennoch auf allen Messenger-Diensten 11, 12, 13, 15 ein Profil bzw. eine Identität haben können und darüber erreichbar sind. Die empfängerspezifischen Messenger-Identitäten sind aus dieser Sicht daher virtuell und unter der Kontrolle des Plattformbetreibers, nicht wie üblich der Person hinter der Identität. Dies ist ein wichtiges Merkmal für Firmen, die Service-Agenten vermitteln oder beschäftigen (vergleichbar mit einer dienstlichen Telefonnummer, die bei der Kündigung des Mitarbeiters bei der Firma verbleibt).

Die Kontrolllogik 2 ist verantwortlich für die Weiterleitung der Nachrichten in der ITP 1 und ggf. durchzuführende oder durchgeführte Kontroll- und Zusatzfunktionen. Eine eingehende Nachricht enthält das messengerspezifische Feld "Empfänger". Die Kontrolllogik 2 sucht in der Sekundärtabelle 17 nach dem Eintrag für dieses Feld (mit dem Profil-Namen oder der Messenger-Identität) und erhält damit auch die führende Identität oder Plattform-Identität des Individualkontakts 5, 6 als Empfänger. Damit kann der Eintrag des Individualkontakts 5, 6 besonders einfach in der Primärtabelle 16 gefunden werden, in dem dann wiederum der ausgewählte User Agent (Ziel-Messenger oder Web-Backend) des Empfängers 5, 6 eingetragen ist, auf dem der Empfänger 5, 6 die Nachricht erhalten und beantworten will. Die ITP 1 schickt die Nachricht dann über die Empfänger-Messenger-API 9 oder das Empfänger-Backend 7 an den Empfänger 5, 6. Falls über den Messenger 15 kommuniziert wird und der Sender 4 ein virtuelles Profil auf dem Empfänger-Messenger 15 besitzt, wird dieses als Sender-Profil angegeben, so dass eine Antwort an dieses Profil genauso (per Lookup und Adressauflösung) behandelt werden kann wie die Anfrage. Im Falle einer Verwendung des ITP-Backends 7 trägt das Backend 7 selbst Sorge, dass die darüber eingegebene Antwort an den ursprünglichen Sender 4 weitergeleitet wird. Falls der Sender 4 kein virtuelles Profil hat und die Anfrage per Messenger 11, 12, 13 an den Empfänger 5,6 unter dem Profil der ITP 1 verschickt wird, fügt die Kontrolllogik 2 dem Nachrichtentext einen Identifikator zu (z.B. die führende Identität der Primärtabelle), den der Berater 5, 6 in der Antwort retourniert. Damit kann die ITP 1 die Antwort wieder genau dem ursprünglichen Sender 4 zuordnen und über den in der Primärtabelle 16 eingetragenen Messenger 11, 12, 13 ausliefern.

Über die grundlegende Gateway- und Vermittlungsfunktion hinaus beachtet die Kontrolllogik 2 noch weitere interne und über die API 10 angeschlossene Systeme, die die Logik beeinflussen oder ergänzen. Über ein angeschlossenes Payment-System kann erreicht werden, dass die Weiterleitung einer Nachricht einen gewissen Betrag kostet, die bei Weiterleitung sofort eingezogen wird. Über ein Zeitmanagement-System kann bewirkt werden, dass ein Zeitplan eines Beraters 5, 6 eingehalten wird, so dass dieser zum Beispiel außerhalb bestimmter Zeiten keine Nachrichten erhält, oder dass ein Berater 5, 6 nur einen Dialog zeitgleich führen darf. Außerdem fällt eine syntaktische oder semantische Kontrolle der Nachrichten unter die Erfindung, dass beispielsweise Nachrichten mit gewissen Inhalten nicht vermittelt werden.

Im Folgenden soll die Funktionsweise der Erfindung anhand eines Beispielszenarios verdeutlicht werden. Das Szenario beschreibt die Situation, dass die Plattform 1, die Sender/Endkunden 4 (Kommunikations-Initiatoren) zu Empfängern/Beratern 5, 6 (Kommunikations-Empfänger) vermittelt, den Kommunikationsparteien 4, 5, 6 eine zahlungspflichtige Messenger-Kommunikation zur Verfügung stellt. Dabei müssen die Parteien 4, 5, 6 nicht denselben Messenger-Dienst 11, 12, 13, 15 verwenden. Exemplarisch ist hier von den imaginären Messenger-Diensten WhatsChat und WeApp die Rede. Dabei ist die konkrete Ausgestaltung der Messenger-Dienste nicht relevant. Wichtig ist jedoch, dass es sich hierbei um zwei verschiedene Messenger-Dienste handelt.

Die Endkundin/Kommunikations-Initiatorin 4 mit dem Namen Alice nutzt den Messenger 11 WhatsChat. Sie ist dort mit ihrer tatsächlichen Telefonnummer 0171 4711007 registriert. Auf der Plattform 1 hingegen ist sie unter der Plattform-Identität "Alice" mit weiteren Zahlungsinformation und ihrer Telefonnummer als "Alice" registriert.

Der Berater/Kommunikations-Empfänger 6 mit dem Namen Bob arbeitet über das Backend 7 direkt auf der Plattform 1. Er hat die virtuelle Messenger-Identität 0173 3971234 bei dem Messenger-Dienst WhatsChat und auf der Plattform 1 die Plattform-Identität "Bob".

Die Beraterin/Kommunikationsempfängerin 5 mit dem Namen Carol nutzt den Messenger 15 WeApp, wo sie die virtuelle Messenger-Identität 0171 1235813 hat. Bei einem weiteren Messenger-Dienst WhatsChat hat sie die virtuelle Messenger-Identität 0173 3971235. Auf der Plattform wird sie mit der Plattform-Identität "Top_Beraterin" geführt. Carol hat außerdem bei dem Messenger-Dienst WeApp eine tatsächliche bzw. persönliche Registrierung unter ihrer echten Handynummer 0151 2244550.

Alle Teilnehmer 4, 5,6 sind auf den Systemen, die sie nutzen, separat registriert. Die Berater 5, 6 nutzen virtuelle Identitäten auf den Messenger-Plattformen, über die sie erreichbar sein wollen, z.B. bei der Einrichtung ihrer Berater-Identität auf der Plattform 1.

Alice registriert sich als bei WhatsChat mit ihrer Handynummer und auf der Plattform 1 als Alice. Dort hinterlegt sie auch ihre Handynummer sowie ihre Bezahlinformationen und akzeptiert die AGB der Plattform 1.

Bob registriert sich auf der Plattform 1 als Bob und erhält darüber hinaus die zusätzliche virtuelle Identität 0173 3971234 bei WhatsChat. Er lehnt es ab, eine zusätzliche virtuelle Identität bei WeApp zu erhalten. Die Plattform verknüpft die beiden Identitäten. Er hat seine Kontoinformationen für Auszahlungen hinterlegt.

Carol registriert sich auf der Plattform 1 als TopBeraterin und erhält darüber die beiden zusätzlichen virtuellen Identitäten 0173 3971234 bei WhatsChat und 0171 1235813 bei WeApp. Die Plattform 1 verknüpft die drei Identitäten von Carol anhand der Sekundärtabelle 17. Carol konfiguriert die Plattform 1 so, dass sie in ihrem eigenen WeApp-Client arbeiten möchte. Sie hat ihre Kontoinformationen für Auszahlungen hinterlegt.

Alle Daten sind in der Plattform abgespeichert und miteinander verknüpft.

Alice möchte sich gerne per Messenger beraten lassen. Sie kennt die virtuelle WhatsChat-Nummer von ihrem Berater Bob, z.B. von einer kundenorientierten Informations-Webseite der Plattform 1 oder aus einer Print- oder TV-Anzeige. Dann kann sie direkt mit ihrem normalen WhatsChat-Client (ihrem Messenger) eine Nachricht an die virtuelle Nummer von Bob schicken. Diese Nachricht wird über den normalen Messenger-Kanal unter Alices Handynummer an die Plattform 1 ausgeliefert. Die Plattform muss nun in der Datenbank 3 nach der Kundenregistrierung suchen, welcher Kunde 4 mit dieser Absendenummer und welcher Berater 5, 6 mit der adressierten (virtuellen) Empfängernummer registriert ist. Die Plattform 1 ermittelt Alice und Bob. Bob arbeitet auf einer Backoffice-Schnittstelle 7 der Plattform 1 selbst, daher wird ihm Alices Anfrage dort angezeigt und er kann sie dort auch beantworten. Die Plattform 1 schickt die Antwort dann wieder über WhatsChat an Alice zurück und stellt die vereinbarte Gebühr in Rechnung bzw. zieht den Betrag ein.

Alice kann auf diese Weise auch eine Beratung mit Carol abwickeln. Die beiden Dialoge werden für sie in der Standard-Ansicht des Messenger-Clients angezeigt. Die Nachrichten von Alice an Carol werden über WhatsChat von Alice an die Plattform 1 und von der Plattform 1 jedoch an die persönliche Identität von Carol bei WeApp geschickt, unter der virtuellen WeApp-Identität von Alice. Carol empfängt und beantwortet die Nachricht mit dem WeApp-Client. Die Antwort geht zunächst über WeApp wieder an die Plattform, die wieder die Identitäten aufeinander abbildet und als tatsächlichen Empfänger die WhatsChat-Identität von Alice ermittelt, an die die Antwort weitergeleitet wird.

Sobald eine Kommunikationsbeziehung zwischen zwei Partnern 4, 5, 6 etabliert ist, kann über jeden Messenger-Client jederzeit und von jeder Seite eine weitere Nachricht gesendet werden und je nach Vertragsbeziehung und Abrechnungsverfahren in Rechnung gestellt werden.

Alternativ zu den virtuellen Nummern für die Teilnehmer 4, 5, 6 (z.B. falls diese von den Messenger-Anbietern nicht unterstützt werden) kann auch In-Band-Identifizierung genutzt werden, dass die Teilnehmer ihre und die Partneridentität in die Nachricht selbst einbauen (bzw. die Plattform sie einsetzt), vergleichbar mit Kennwörtern bei SMS-Shortcodes.

Ein Beispiel-Dialog mit In-Band-Adressierung und Kostenabrechnung wird folgendermaßen realisiert:
Die folgende Nachricht von Alice wird an die zentrale Nummer der Plattform 1 übermittelt:
"Top_Beraterin Wie wird das Wetter morgen?"

Dieser Text geht als Nachricht unter Alices Absenderadresse über WhatsChat ein. Die Plattform 1 ermittelt aus der Datenbank 3, welche Identität hinter dem Pseudonym "Top_Beraterin" steckt, das als Schlüsselwort an erster Stelle der Nachricht steht, und ordnet es der Identität 0171 1235813 bei WeApp zu. Dorthin wird die Nachricht mit der eingesetzten Absende-Identität wie folgt übertragen:
"Alice Wie wird das Wetter morgen?"

Carol beantwortet die Frage zuerst mit der In-Band-Kostennotiz:
"Alice Kosten 2 Euro"

Diese Nachricht wird per WeApp an die Plattform 1 übertragen, entsprechend umgesetzt und per WhatsChat an Alice geschickt.

"Top_Beraterin Kosten 2 Euro"

Alice bestätigt diese Nachricht:
"Top_Beraterin OK"

Analog wie oben beschrieben wird die Nachricht an Carol weiter geleitet. Diese hat nun die Gewissheit, dass ihre Antwort bezahlt werden wird und schickt eine Antwort.

"Alice Sonnig mit 25 Grad, abends Wolken aber trocken".

Diese Nachricht wird wieder zurückgeleitet, die Plattform zieht 2 Euro von Alices Konto ein und zahlt Carol den vereinbarten Anteil aus.

## Patentansprüche

1. Verfahren zur Kommunikation mittels Messenger-Nachrichten zwischen zumindest einem Sender (4) und zumindest einem Empfänger (5, 6) über zumindest einen Messenger-Dienst (11, 12, 13, 15), wobei die Messenger-Dienste (11, 12, 13, 15) kommunikationstechnisch mit einer Integrationsplattform (1) verbunden ist oder wird und
eine Nachricht vom Sender (4) mittels des Messenger-Dienstes (11, 12, 13) unter Verwendung einer senderspezifischen Sender-Messenger-Identität und einer empfängerspezifischen Sender-Messenger-Identität an die Integrationsplattform (19 übermittelt wird,
in der Integrationsplattform (1) der senderspezifischen Sender-Messenger-Identität und der empfängerspezifischen Sender-Messenger-Identität jeweils eine hinterlegte senderspezifische bzw. empfängerspezifische Plattform-Identität zugeordnet werden, eine der empfängerspezifischen Plattform-Identität zugehörige empfängerspezifische Empfänger-Identität ermittelt wird und
die Nachricht von der Integrationsplattform an die empfängerspezifischen Empfänger-Identität geleitet wird.

2. Verfahren nach Anspruch 1,
**dadurch gekennzeichnet, dass**
die empfängerspezifische Empfänger-Identität mit einer Operator-Schnittstelle verknüpft ist und die Nachricht an die Operator-Schnittstelle geleitet wird.

3. Verfahren nach Anspruch 1,
**dadurch gekennzeichnet, dass**
als empfängerspezifische Empfänger-Identität eine empfängerspezifische Empfänger-Messenger-Identität des Messenger-Dienstes (11, 12, 13) oder eines weiteren Messenger-Dienstes (11, 12, 13) ermittelt wird und die Nachricht von der Integrationsplattform (1) an die empfängerspezifischen Empfänger-Messenger-Identität geleitet wird.

4. Verfahren nach einem der vorhergehenden Ansprüche,
**dadurch gekennzeichnet, dass**
die Nachricht zur Durchführung einer In-Band-Steuerung ausgebildet ist und zumindest ein Keyword zur Identifizierung des Empfängers (5, 6) enthält, das in der Integrationsplattform (1) der empfängerspezifischen Plattform-Identität zugeordnet wird.

5. Verfahren nach einem der Ansprüche 1 bis 4,
**dadurch gekennzeichnet, dass**
auf der Integrationsplattform (1) für den Empfänger (5, 6) eine (einzige) empfängerspezifische Plattform-Identitäten hinterlegt ist oder wird, die mit mehreren empfängerspezifischen Messenger-Identitäten für den Empfänger (5, 6) gekoppelt ist.

6. Verfahren nach einem der Ansprüche 1 bis 5,
**dadurch gekennzeichnet, dass**
auf der Integrationsplattform (1) für den Sender (5) eine (einzige) senderspezifische Plattform-Identitäten hinterlegt ist oder wird, die mit mehreren senderspezifischen Messenger-Identitäten für den Sender (4) gekoppelt ist.

7. System zur Kommunikation mittels Messenger-Nachrichten zwischen zumindest einem Sender (4) und zumindest einem Empfänger (5, 6) über zumindest einen Messenger-Dienst (11, 12, 13, 15), welches System zum Durchführen eines Verfahrens nach einem der vorhergehenden Ansprüche ausgelegt ist.

8. System nach Anspruch 7,
**dadurch gekennzeichnet, dass**
dieses eine Integrationsplattform (1) mit einer Kontrolllogik (2) und eine Datenbank (3) mit Zuordnungen senderspezifischer und empfängerspezifischer Messenger-Identitäten und Plattform-Identitäten umfasst,
wobei die Integrationsplattform (1) zur Kommunikation mit der Datenbank (3) ausgebildet ist und
zumindest eine Messengerschnittstelle (8, 9) zur Kommunikation mit einem Messenger-Dienst (11, 12, 13, 15) aufweist.

9. System nach Anspruch 7 oder 8,
**dadurch gekennzeichnet, dass**
die Datenbank (3) eine relationale Datenbank, eine dokumentorientierte Datenbank oder eine NoSQL-Datenbank ist.
